# EUROPEAN PATENT SPECIFICATION

(11) **EP 0 727 651 B1**
(45) Date of publication and mention of the grant of the patent: **30.10.2002**
(21) Application number: 95300961.0
(22) Date of filing: 15.02.1995
(51) Int. Cl.: G01M 3/28

(54) **System and method for in situ testing of the leak-tightness of a tubular member**
System und Verfahren zur in situ Überprüfung der Dichtigkeit eines Rohres
Système et méthode d'essai sur place de l'étanchéité d'un membre tubulaire

(43) Date of publication of application: 21.08.1996
(73) Proprietor: Westinghouse Electric Company LLC, Monroeville, PA 15146-2866 (US)
(72) Inventor: Keating, Robert Frank, Trafford, Pennsylvania 15085 (US); Snyder, David Allen, North Huntingdon, Pennsylvania 15642 (US)
(74) Representative: van Berlyn, Ronald Gilbert

(56) References cited:
- DE-A- 3 537 975
- US-A- 3 196 666
- US-A- 3 750 711
- PATENT ABSTRACTS OF JAPAN vol. 12 no. 429 (P-785) ,14 November 1988 & JP-A-63 163251 (KUBOTA LTD) 6 July 1988,

## Description

### BACKGROUND

This invention generally relates to leak testing and more particularly relates to a system and method for in situ testing of the leak-tightness and leak rate of a wall portion of a tubular member, which tubular member may be a heat transfer tube of the kind found in typical nuclear steam generators.

Although leak testing devices and methods are known, it has been observed that these devices and methods have a number of operational problems associated with them which make such devices and methods less than completely satisfactory for leak testing heat transfer tubes of the kind found in typical nuclear steam generators. However, before these problems can be appreciated, some background is desirable as to the structure and operation of a typical nuclear steam generator.

In this regard, a typical nuclear steam generator or heat exchanger generates steam when heat is transferred from a heated and radioactive primary fluid to a non-radioactive secondary fluid of lower temperature. The primary fluid flows through a plurality of U-shaped tubes disposed in the steam generator. The secondary fluid flows across the exterior surfaces of the tubes as the primary fluid flows through the tubes. The walls of the tubes function as heat conductors for transferring the heat from the heated primary fluid flowing through the tubes to the secondary fluid of lower temperature flowing across the exterior surfaces of the tubes. As the heat is transferred from the primary fluid to the secondary fluid, a portion of the secondary fluid vaporizes to steam for generating electricity in a manner well understood in the art.

Occasionally, due to tube wall cracking caused by stress and corrosion during operation (i.e., known in the art as primary water stress corrosion cracking), the steam generator tubes may degrade (i.e., experience tube wall thinning) and thus may not remain leak-tight. If through-wall cracking occurs due to the degradation, the radioactive primary fluid may undesirably leak through the crack and commingle with the nonradioactive secondary fluid.

Therefore, such leaking tubes may be plugged to prevent commingling the radioactive primary fluid with the nonradioactive secondary fluid. However, for safety reasons, technical specifications imposed by the United States Nuclear Regulatory Commission on each nuclear reactor power plant holding an operating license set a limit on the percentage of heat transfer tubes that may be plugged. Exceeding this technical specification limit jeopardizes the operating license of the power plant. It is therefore prudent to plug only those heat transfer tubes that require plugging.

However, it has been observed that not all leaking tubes require plugging because a small amount of tube leakage is tolerable. This is so because small amounts of tube leakage do not pose safety concerns. In view of this, the United States Nuclear Regulatory Commission has issued Draft Regulatory Guide 1.121 (NUREG-1477) which provides a basis for determining acceptable tube leakage in order to identify which degraded or leaking steam generator tubes must be plugged in order to satisfy safety requirements. In general, Draft Regulatory Guide 1.121 sets a limit for an acceptable leak rate at a specified pressure in the tube, the pressure being that which would be experienced during a postulated accident (e.g., main steam line break). Therefore, under the requirements of Draft Regulatory Guide 1.121, a degraded or leaking tube may be "leak-rate tested" to determine whether or not the tube will have an acceptable leak rate during such a postulated accident. If the leak-rate is acceptable, then the leaking tube need not be plugged. Of course, it is desirable to perform such a leak-rate test in a precise and cost efficient manner.

Devices and methods for leak-testing of nuclear steam generator tubes are known. For example, an apparatus and method for testing the tightness of closed-end tubes in heat exchangers of nuclear reactors is disclosed in U.S. Patent No. 3,919,880 titled "Method And Apparatus For Testing Closed-End Tubes In Heat Exchangers of Nuclear Reactors And The Like" issued November 18, 1975 in the name of Günter Seyd, et al. This patent discloses a method and apparatus for detecting a leak in a heat exchanger tube of a nuclear reactor by inserting an expandable plug which seals off a closed region in the heat exchanger tube. A pressurized fluid is then introduced into the closed region, and the pressure of the fluid is monitored for detecting a leak through the closed end of the tube. However, this patent merely discloses testing for the leak-tightness of a closed-end tube with a fluid under pressure, and merely discloses sealing the tube at one point with an expandable plug and testing the area located between the expandable plug and the closed end of the tube to determine if the closed end of the tube permits leaking. This patent does not appear to disclose leak testing for fluid flow rate through a crack in the walls of an open-ended tube. Leak testing of an open-ended tube is required for leak testing steam generator heat transfer tubes in the manner satisfying Draft Regulatory Guide 1.121 (NUREG-1477).

It is an object of the present invention to dampen inadvertent pressure spikes in the fluid supply whereby to enable accurate control and measuring of the pressure and fluid flow in the fluid supply notwistanding the inadvertent spikes.

Reference is made to prior art documents DE-A-3537975 and US-A-3370711 which disclose a method wherein an elongate body is inserted into a tubular member and two seal members are expanded by blowing pressurized air through a pipe to engage the wall portion of the tubular member so that a sealed annular chamber is defined. A fluid is supplied by a fluid supply means to a predetermined pressure and a flow meter measures the needed quantity of fluid per time to replace leaking fluid.

The invention consists in a system for in situ testing of the leak-tightness of a wall portion of a tubular member, comprising :
(a) an elongate body insertable into the tubular member;
(b) spaced-apart radially expandable seal means surrounding said body for sealingly engaging the wall portion, so that a sealed annular chamber is defined in communication with the wall portion as said seal means engages the wall portion;
(c) fluid supply means in fluid communication with the chamber for supplying a fluid to the chamber to pressurize the chamber to a predetermined pressure;
(d) a controller connected to said fluid supply means for controlling said fluid supply means, so that said fluid supply means controllably supplies the fluid to the chamber to maintain the predetermined pressure in the chamber as a breach in the wall portion in communication with the chamber allows the fluid to leak from the chamber; and characterized by :
(e) an accumulator tank in fluid communication with said fluid supply means for dampening pressure spikes in said fluid supply means.

The invention also consists in a method of testing the leak-tightness of a wall portion of a tubular member, comprising :
(a) inserting an elongate body into the tubular member;
(b) defining a sealed annular chamber adjacent the wall portion by sealingly engaging the wall portion with a pair of expanded spaced-apart bladders-surrounding the elongate body;
(c) pressurizing the chamber by supplying a fluid to the chamber from a fluid supply circuit in fluid communication with the chamber;
(d) controlling the fluid supply circuit by connecting a controller to the fluid supply circuit;
(e) maintaining a predetermined pressure in the chamber as a breach in the wall portion adjacent the chamber allows the fluid to leak from the chamber by controllably supplying the fluid to the chamber, so that the leak-tightness of the wall portion is tested as the fluid leaks from the chamber;
   and characterized by the step of :
(f) dampening pressure spikes in the fluid supply circuit by providing an accumulator tank connected to the fluid supply circuit.

A feature of the present invention is the provision of an elongate body insertable into the tube and spaced-apart expandable bladders surrounding the elongate body, the bladders capable of radially expanding into sealing engagement with the inner diameter of the tube to define a sealed annular chamber between the bladders.

Another feature of the present invention is the provision of a fluid supply circuit in fluid communication with the bladders and with the chamber to hydraulically pressurize the bladders and the chamber.

Yet another feature of the present invention is the provision of a flow meter connected to the fluid supply circuit for measuring the flow rate of the fluid flowing through the fluid supply circuit.

An advantage of the present invention is that empirical leak-rate data usable for satisfying Draft Regulatory Guide 1.121 (NUREG-1477) can now be obtained in a precise and cost effective manner.

These and other features and advantages of the present invention will become apparent to those skilled in the art upon a reading of the following detailed description when taken in conjunction with the drawings wherein there is shown and described illustrative embodiments of the invention.

### BRIEF DESCRIPTION OF THE DRAWINGS

While the specification concludes with claims particularly pointing out and distinctly claiming the subject matter of the invention, it is believed the invention will be better understood from the following description taken in conjunction with the accompanying drawings wherein:
Figure 1 is a perspective view in partial vertical section of a typical nuclear steam generator with parts removed for clarity, the steam generator having a plurality of U-shaped heat transfer tubes disposed therein;
Figure 2 illustrates the system of the invention in operative condition to leak test in situ a preselected one of the tubes;
Figure 3 shows in elevation a mandrel supportiAg a pair of expandable bladders thereon, the mandrel and bladders being disposed in the tube;
Figure 4 shows in vertical section the mandrel and bladders disposed in the tube;
Figure 4A is a fragmentation view in vertical section showing the mandrel and bladders disposed in the tube, the bladders being shown pressurized into intimate sealing engagement with the inner diameter of the tube to define an annular chamber bounded by the bladders and the inner diameter of the tube; and
Figure 5 illustrates fluid supply means in fluid communication with the bladders and with the chamber for pressurizing the bladders and the chamber.

### DESCRIPTION OF THE PREFERRED EMBODIMENTS

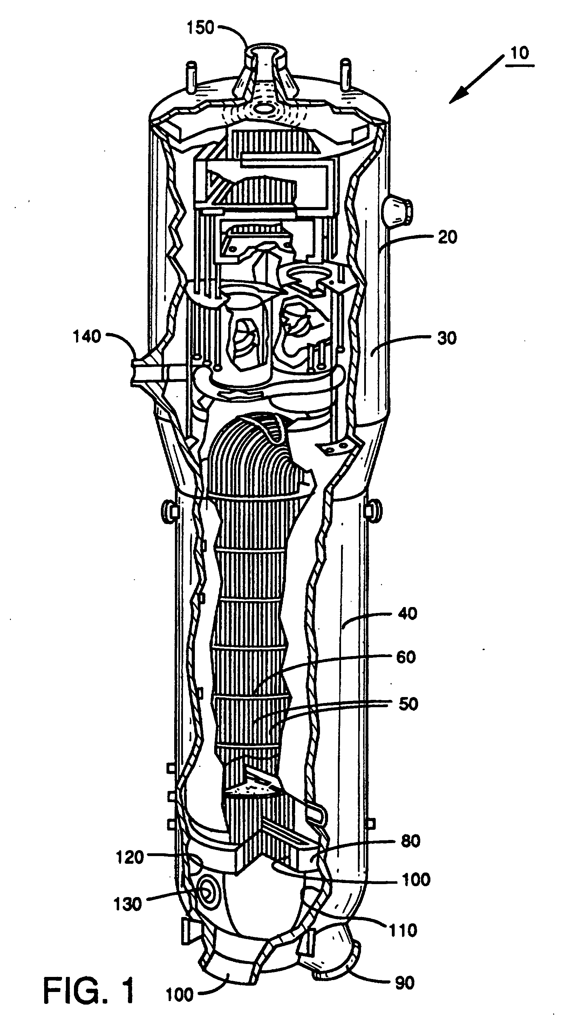

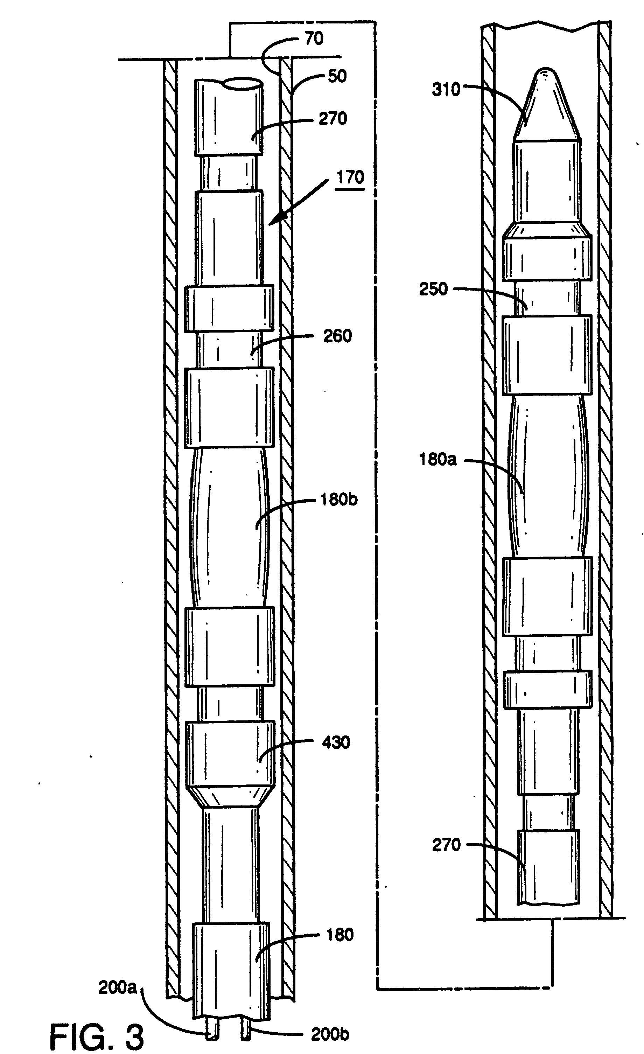

Referring to Fig. 1, there is shown a typical nuclear steam generator, generally referred to as 10, for generating steam. Steam generator 10 comprises a hull 20 having an upper portion 30 and a lower portion 40. Disposed in hull 20 are a plurality of vertical U-shaped heat transfer tubes 50 that extend through a plurality of horizontal support plates 60. Each tube 50 has an inner diameter 70 (see Fig. 3). As shown in Fig. 1, disposed in lower portion 40 is a horizontal tube sheet 80 for supporting the ends of each tube 60. Disposed on hull 20 are a first inlet nozzle 90 and a first outlet nozzle 100 in fluid communication with an inlet plenum chamber 110 and with an outlet plenum chamber 120, respectively. A plurality of manway holes 130 are formed through hull 20 below tube sheet 80 for allowing access to inlet plenum chamber 110 and outlet plenum chamber 120. Moreover, formed through hull 20 above tube sheet 80 is a second inlet nozzle 140 for allowing entry of a non-radioactive secondary fluid (i.e., demineralized water) into hull 20. A second outlet nozzle 150 is disposed on the top of upper portion 30 for exit of steam from steam generator 10.

During operation of steam generator 10, pressurized and radioactive primary fluid (i.e., demineralized water) heated by a nuclear reactor core (not shown) enters inlet plenum chamber 110 through first inlet nozzle 90 and flows through tubes 50 to outlet plenum chamber 120 where the primary fluid exits steam generator 10 through first outlet nozzle 100. As the primary fluid enters inlet plenum chamber 110, the secondary fluid simultaneously enters second inlet nozzle 140 to ultimately surround tubes 50. A portion of this secondary fluid vaporizes into steam which rises upwardly to exit steam generator 10 through second outlet nozzle 150. The steam is piped to a turbine-generator set (not shown) for generating electricity in a manner well understood in the art. Moreover, the primary fluid is radioactive; therefore, for safety reasons, tubes 50 are designed to be leak-tight, so that the radioactive primary fluid does not commingle with the nonradioactive secondary fluid.

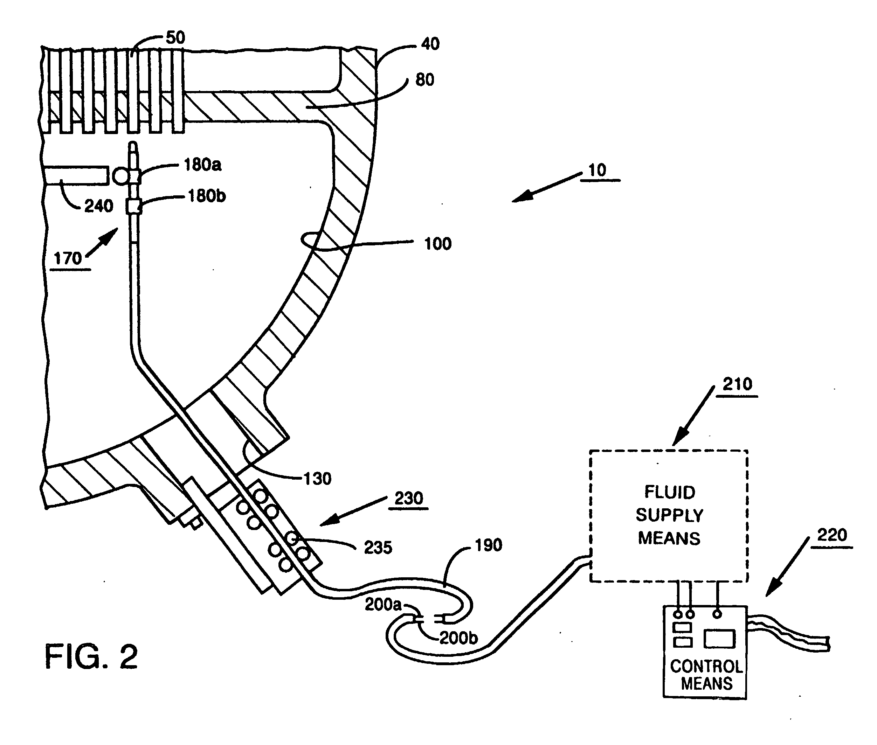

Turning now to Fig. 2, there is shown the subject matter of the present invention, which is a system, generally referred to as 160, for in situ testing of the leak-tightness of a wall portion of a tubular member, which tubular member may be heat transfer tube 50 disposed in nuclear steam generator 10. System 160 comprises a body or mandrel, generally referred to as 170, insertable into tube 50 and having seal means, such as a pair of expandable bladders 180a/b, thereon for reasons described hereinbelow. Connected to mandrel 170 is a flexible protective hose 190 protectively surrounding two flexible fluid supply conduits 200a/b, for reasons described more fully hereinbelow. Hose 190 and conduits 200a/b are connected to fluid supply means, generally referred to as 210, for supplying fluid to mandrel 170, as disclosed in detail hereinbelow. Control means, generally referred to as 220, is connected to fluid supply means 210 for controlling fluid supply means 210. In addition, a hose driver, generally referred to as 230, includes at least one rotatable wheel 235 capable of engaging hose 190 for driving or translating hose 190 and the mandrel 170 connected thereto along the longitudinal axis of tube 50. Moreover, a support mechanism 240 is connected to mandrel 170 for aligning mandrel 170 coaxially with tube 50. Support mechanism 240 is also capable of supporting hose 190 and mandrel 170 as hose 190 and mandrel 170 are translated in tube 50. In this regard, support mechanism 240 may be a ROSA (Remotely Operated Service Arm) robot available from the Westinghouse Electric Corporation located in Pittsburgh, Pennsylvania, U.S.A. The structure and function of each of these major components of system 160 are described in more detail hereinbelow.

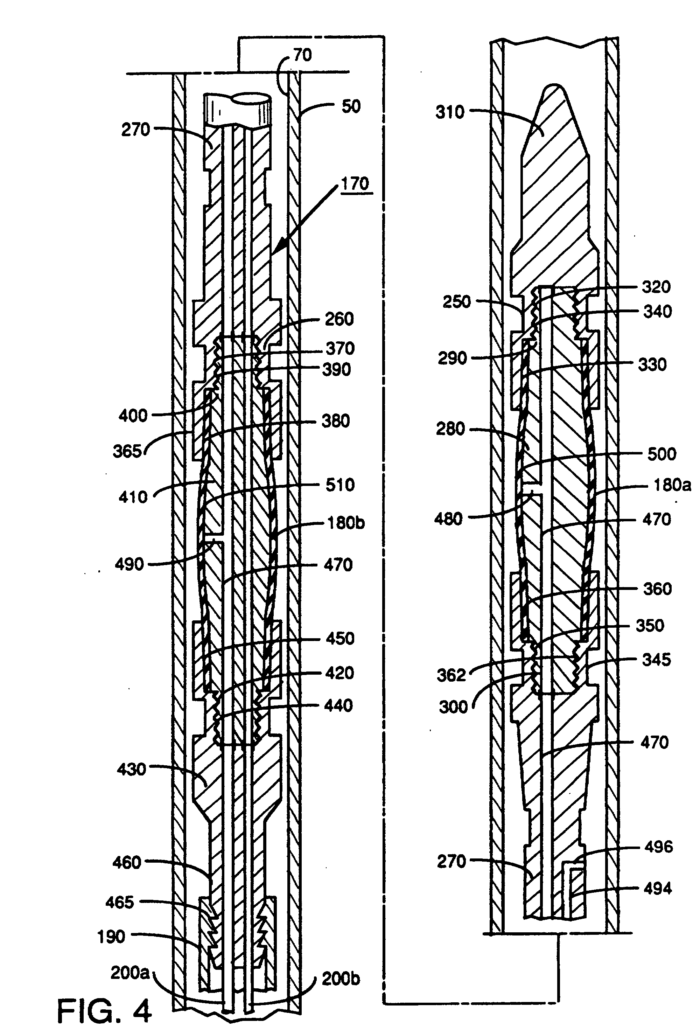

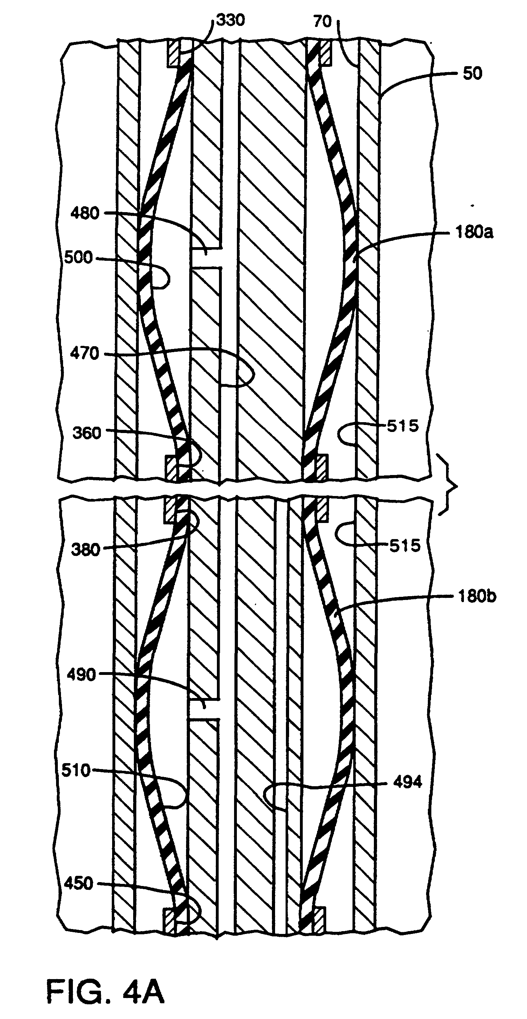

Referring to Figs. 3 and 4, mandrel 170 comprises a generally cylindrical proximal end portion 250 and a generally cylindrical distal end portion 260 integrally interconnected by a generally cylindrical intermediate portion 270. It will be appreciated, with reference to the several figures, that the terminology "proximal end portion" is defined herein to mean that end portion disposed nearer the bottom of outlet plenum chamber 110 (or inlet plenum chamber 120) and that the terminology "distal end portion" is defined herein to mean that end portion disposed farther away from the bottom of outlet plenum chamber 110 (or inlet plenum chamber 120). Distal end portion 250 of mandrel 170 includes a generally cylindrical first central body 280 having an externally threaded distal end portion 290 and an externally threaded proximal end portion 300. Threadably connected to distal end portion 290 is a generally conical nose member 310 for easily inserting mandrel 170 into tube 50. Nose member 310 has a step bore 320 defining an unthreaded portion 330 therein for reasons disclosed presently. Step bore 320 also has an internally threaded portion 340 of smaller diameter than unthreaded portion 330 for threadably engaging the external threads of distal end portion 290 belonging to first central body 280. In this manner, nose member 310 is threadably connected to first central body 280. In addition, threadably connected to proximal end portion 300 of first central body 280 is the intermediate portion 270. A distal end portion 345 of intermediate portion 270 has a step bore 350 defining an unthreaded portion 360 therein for reasons disclosed presently. Step bore 350 also has an internally threaded portion 362 of smaller diameter than unthreaded portion 360 for threadably engaging the external threads of proximal end portion 300 which belongs to first central body 280. In this manner, intermediate portion 270 is threadably connected to first central body 280. Moreover, a proximal end portion 365 of intermediate portion 270 has a step bore 370 defining an unthreaded portion 380 therein for reasons disclosed presently. Step bore 370 also has an internally threaded portion 390 of smaller diameter than unthreaded portion 380 for threadably engaging the external threads of a proximal end portion 400 belonging to a generally cylindrical second central body 410. In this manner, intermediate portion 270 is threadably connectable to second central body 410. In addition, threadably connected to a proximal end portion 420 second central body 410 is a connector 430 having a step bore 440 defining an unthreaded portion 450 therein for reasons disclosed presently. Step bore 440 also has an internally threaded portion of smaller diameter than unthreaded portion 450 for threadably engaging the external threads of proximal end portion 420 which belongs to second central body 410. In this manner, connector 430 is threadably connected to second central body 410. A proximal end portion 460 of connector 430 may have a plurality of serrations 465 around the exterior surface thereof for engaging the inside surface of hose 190 in order to secure hose 190 to connector 430.

As best seen in Figs. 4 and 4A, a first channel or flow passage 470 extends longitudinally through connector 430, second central body 410, intermediate portion 270 and first central body 280. First channel 470 is in communication with a first port 480 on the exterior surface of first central body 280 for conducting an incompressible fluid (e.g., water, oil or the like) to the exterior surface of first central body 280. First channel 470 is also in communication with a second port 490 on the exterior surface of second central body 410 for conducting the incompressible fluid to the exterior surface of second central body 410. As disclosed in more detail hereinbelow, first channel 470 is in fluid communication with fluid supply conduit 200a for supplying the fluid to first channel 470. Moreover, a second channel or flow passage 494 extends longitudinally through connector 430, second central body 410 and into intermediate portion 270. Second channel 494 is in communication with a third port 496 on the exterior surface of intermediate portion 270 for conducting the fluid to the exterior surface of intermediate portion 270. As disclosed in more detail hereinbelow, second channel 494 is also in fluid communication with fluid supply conduit 200b for supplying the fluid to second channel 494.

Still referring to Figs. 4 and 4A, surrounding first central body 280 is the previously mentioned seal means or generally tubular first bladder 180a which may be formed from a resilient thermo elastomer material. First bladder 180a has an inner surface 500 that covers first port 480. One end of first bladder 180a is disposed in unthreaded portion 330 of nose member 310. This end of first bladder 180a is sized to be tightly sealingly interposed between first central body 280 and nose member 310, such sealing being preferably obtained by a press fit. The other end of first bladder 180a is disposed in unthreaded portion 360 of intermediate portion 270. This end of first bladder 180a is sized to be tightly sealingly interposed between first central body 280 and intermediate portion 270, such sealing being preferably obtained by a press fit. Thus, first bladder 180a is sealingly connected to first central body 280 so that the interface between first central body 280 and the opposite ends of first bladder 180a is leak-tight as first bladder 180a is expansively pressurized, in the manner described hereinbelow.

Referring again to Figs. 4 and 4A, surrounding second central body 410 is the previously mentioned seal means or generally tubular second bladder 180b which also may be formed from the resilient thermo elastomer material mentioned hereinabove. Second bladder 180b has an inside surface 510 that covers second port 490. One end of second bladder 180b is disposed in unthreaded portion 380 of intermediate portion 270. This end of second bladder 180b is sized to be tightly sealingly interposed between second central body 410 and intermediate portion 270, such sealing being preferably obtained by a press fit. The other end of second bladder 180b is in unthreaded portion 450 of connector 430. This end of second bladder 180b is sized to be tightly sealingly interposed between second central body 410 and connector 430, such sealing being preferably obtained by a press fit. Thus, second bladder 180b is sealingly connected to second central body 410, so that the interface between second central body 410 and the opposite ends of second bladder 180b is leak-tight as second bladder 180b is expansively pressurized in the manner described hereinbelow. As bladders 180a/b are pressurized to radially expand and intimately engage inner diameter 70 of tube 50, they will define a sealed annular chamber 515 therebetween (see Fig. 4A).

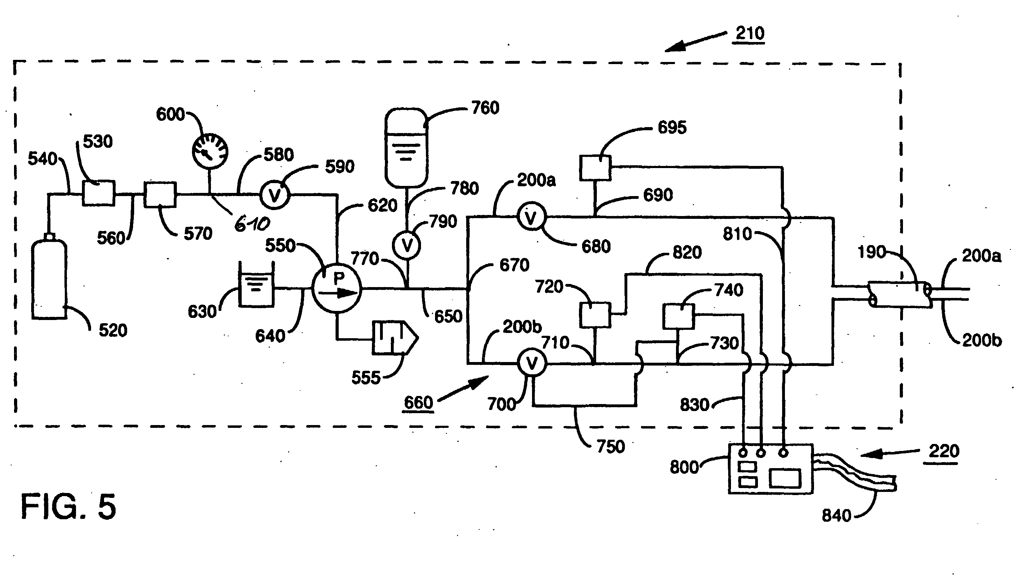

Referring now to Fig. 5, system 160 further comprises the previously mentioned fluid supply means 210 which supplies fluid to mandrel 170. In this regard, fluid supply means 210 includes a pressurized gas fluid reservoir, such as a compressed air supply 520, connected to a suitable filter 530, such as by a pipe 540. Filter 530 filters the air stream passing through pipe 540 in order to remove any dirt, water and foreign particulate matter therefrom. The purpose of air supply 520 is to operate an air pump 550, for reasons disclosed hereinbelow. It is important that filter 530 remove the dirt, water and foreign particulates from the air stream in order to sustain the operating life of air pump 550. Sustaining the operating life air pump 550 ensures that the pressure of the fluid exiting pump 550 is repeatable. Air operated pump 550 has a muffler device 555 associated therewith for exhausting the air supplied to air operated pump 550. Filter 530 is connected, such as by a pipe 560, to an air regulator 570. The filtered air flows from filter 530, through pipe 560 and into air regulator 570. From air regulator 570, the air flows into a pipe 580 interconnecting air regulator 570 and a first valve 590. Air regulator 570 is adapted to regulate or control the pressure of the air passing into pipe 580. First valve 590 may be a solenoid valve. A pressure gauge 600 may be in fluid communication with pipe 580, for displaying the air pressure in pipe 580 to the operator of system 160. A pipe 620 interconnects first valve 590 with air operated pump 550.

Still referring to Fig. 5, air operated pump 550 is capable of pumping an incompressible fluid or liquid (e.g., water, oil or the like) from a liquid reservoir 630 which is connected to it, such as by pipe 640. Pump 550 is itself connected, such as by a pipe 650, to what is termed herein a "dual flow circuit", generally referred to as 660. Pipe 650 is connected to dual flow circuit 660 as at location 670. Dual flow circuit 660 includes the previously mentioned first fluid supply conduit 200a, which first conduit 200a supplies the liquid to first channel 470. Dual flow circuit 660 also includes the previously mentioned second fluid supply conduit 200b, which second conduit 200b supplies the liquid to second channel 494. Disposed in first conduit 200a is a second valve 680, which may be a solenoid valve. Connected to first conduit 200a, as at location 690 downstream of second valve 680, is a first pressure transducer 695 for sensing the liquid pressure in first conduit 200a as the liquid flows through first conduit 200a. In addition, disposed in second conduit 200b is a third valve 700, which also may be a solenoid valve. That is, third valve 700 is capable of adjusting the pressure of the liquid flowing in second conduit 200b in order to adjust or ramp the pressure in chamber 515 to a predetermined value. Connected to second conduit 200b, as at location 710 downstream of third valve 700, is a flow meter 720 for measuring the flow of the liquid in second conduit 200b. Moreover, connected to, second conduit 200b, as at location 730 downstream of flow meter 720, is a second pressure transducer 740 for sensing the pressure of the liquid in second conduit 280b as the liquid flows through second conduit 280b. In addition, interconnecting second pressure transducer 740 and third valve 700 may be a "feedback loop" in the form of an electrical conductor wire 750 for controlling the operation of third valve 700 in order to control the flow rate (and thus the pressure) of the liquid flowing in second conduit 200b. In addition, interconnecting second pressure transducer 740 and third valve 700 may be a "feedback loop" in the form of an electrical conductor wire 750. In this regard, the following will describe the manner in which pressure transducer 740 interfaces or cooperates with third valve 700. Third valve 700, which controls the pressure, provides an output pressure proportional to its electrical command signal input. Furthermore, interconnecting pipe 650 and an accumulator tank 760, as at location 770, is a pipe 780 having a fourth valve 790 disposed therein for controlling the flow of liquid to and from accumulator tank 760. Fourth valve 790 may be a solenoid valve. As shown in Fig. 5, accumulator tank 760 has a predetermined amount of liquid therein for maintaining the liquid pressure in pipe 650 and thus for maintaining the liquid pressure in dual fluid supply circuit 660, which is connected to pipe 650. The presence of accumulator tank 760 will dampen inadvertent pressure spikes in fluid supply means 210. More specifically, the purpose of accumulator tank 760 is to remove or smooth-out pressure spikes or pulsations produced by the double-acting reciprocating air pump 550. The presence of accumulator tank 760 allows for accurate control and measurement of the pressure and fluid flow in fluid supply means 210.

Referring yet again to Fig. 5, system 160 further comprises the previously mentioned control means 220 electrically connected to fluid supply means 210 for controlling fluid supply means 210. Control means 220 includes a controller 800 electrically connected, such as by an electrical conductor wire 810, to first pressure transducer 695 for measuring and recording the liquid pressure sensed by first pressure transducer 695. Controller 800 is also electrically connected, such as by an electrical conductor wire 820, to flow meter 720 for measuring and recording the flow rate of the liquid metered by flow meter 720. Moreover, controller 800 is electrically connected, such as an by electrical conductor wire 830, to second pressure transducer 740 for measuring and recording the pressure sensed by second pressure transducer 740. Controller 800 includes display means, such as a paper strip chart 840, for displaying the flow rate and pressures measured and recorded by controller 800. Controller 800 may be computerized for automatically measuring and recording the flow rate and pressures and for automatically controlling fluid supply means 210.

### OPERATION

Steam generator 10 is first removed from service in a manner well understood in the art and system 160 is transported sufficiently near steam generator 10 to perform the leak test.

In this regard, hose driver 230 is connected to manway 130 and support mechanism 240 is installed in outlet plenum chamber 110 (or inlet plenum chamber 120). The hose driver 230 and support mechanism 240 are used in the customary manner to translate an eddy current probe (not shown) in tube 50 for detecting the location of the degraded portion (not shown) of tube 50. As the eddy current probe encounters the degraded portion of tube 50, it will generate a voltage amplitude uniquely characteristic of the degradation. This voltage amplitude is suitably recorded, such as in a data base. The eddy current probe is then withdrawn from tube 50.

Next, mandrel 170 is inserted through manway 130 and into outlet plenum chamber 110 (or into inlet plenum chamber 120), whereupon it is engaged by support mechanism 240 for aligning the longitudinal axis of mandrel 170 with the longitudinal axis of tube 50. Wheels 235 of hose driver 230 are caused to engage hose 190 and rotate so that mandrel 170 advances to the location of the degradation in tube 50 identified by the previously mentioned eddy current probe. In this regard, mandrel 170 is advanced in tube 50 such that intermediate portion 270 is positioned adjacent the degradation.

Next, fluid supply means 210 is operated to radially expand bladders 180a/b into intimate sealing engagement with inner diameter 70 of tube 50, such that annular sealed chamber 515 is defined therebetween. More specifically, first valve 590, second valve 680 and fourth valve 790 are opened as third valve 700 is closed. Compressed air supply 520 is then operated to supply compressed or pressurized air into pipe 540, through filter 530, through pipe 560, through air regulator 570, through open first valve 590 and to air operated pump 550. As air operated pump 550 operates, it withdraws the water from fluid reservoir 630, which water flows through pipes 640 and 650 to be received by dual flow circuit 660. The water then flows through first conduit 200a, through open second valve 680 and to first channel 470 which is formed in mandrel 170. After passing into first channel 470, the water will exit first and second ports 480/490 to pressurize bladders 180a/b, respectively, so that bladders 180a/b sealingly engage inner diameter 70 to define sealed annular chamber 515 therebetween.

After bladders 180a/b are thusly pressurized to a first predetermined pressure (e.g., approximately 27.579 MPa or 4,000 psia), second valve 680 is closed and third valve 700 is opened to precisely pressurize chamber 515 to a second predetermined pressure, which second predetermined pressure may be the anticipated pressure during normal operation or during a main steam line break accident (e.g., approximately 18.961 MPa or 2,750 psia). Third valve 700 is capable of adjusting or ramping the pressure in second conduit 200b so that any number of second predetermined pressures are obtainable. As the water is pumped to dual flow circuit 660, it will flow through second conduit 200b, through open third valve 700 and to second channel 494 in mandrel 170. After passing into second channel 494 which is formed in mandrel 170.

As chamber 515 is pressurized, the pressurized water therein will leak, seep or flow out chamber 515 through any through-wall crack (not shown) adjacent chamber 515. However, as the water flows through the crack, the inventory of water in chamber 515 will remain constant because fluid supply means 210 will continue to supply water to chamber 515 to maintain the predetermined pressure therein. Moreover, because the water inventory in chamber 515 remains constant, the flow rate of the water supplied through second fluid supply conduit 200b must necessarily exactly equal the flow rate of the water flowing through the crack in the degraded portion of tube 50. Thus, it will be appreciated from the description hereinabove, that measuring the flow rate of the water flowing through second conduit 200b will simultaneously exactly measure the flow rate of the water flowing through the crack. It will also be appreciated from the description hereinabove, that the pressure in chamber 515 must necessarily exactly equal to the pressure in second conduit 200b.

The flow rate of the water flowing through second conduit 200b is measured and recorded by controller 800, which is electrically connected to flow meter 720 that is in turn hydraulically connected to second conduit 200b. Moreover, the pressure in chamber 515 is also measured and recorded by controller 800, which is electrically connected to second pressure transducer 740 that is in turn hydraulically connected to conduit 200b. In this manner, the flow rate of the water through the crack and the pressure in chamber 515 are precisely measured by controller 800. Controller 800 also displays and records, such as by the paper strip chart 840, the flow rate through the crack and the pressure in chamber 515.

Thus, it will be understood that three empirical data values are obtainable characterizing the crack in tube 50. First, the eddy current measurement provides a voltage amplitude value uniquely associated with the crack. Second, at least one value of pressure (i.e., the predetermined pressure in chamber 515) has been obtained. Third, at least one value of the flow rate of the water through the crack at the pressure in chamber 515 has been obtained. Of course, a plurality of pressure values and associated flow rates corresponding to each of a plurality the voltage amplitude readings are preferably measured and recorded in order to establish a suitable data base. That is, an eddy current voltage amplitude measurement for each of a plurality of degraded portions of the same tube or different tubes may be taken and the leak-tightness testing process repeated for each voltage amplitude reading.

Such a data base may be used to conveniently determine the anticipated flow rate at a given pressure through a crack in a heat exchanger tube belonging to an operating nuclear steam generator simply by performing an eddy current measurement on the tube. That is, an eddy current measurement is performed on the tube to obtain a voltage amplitude value uniquely associated with a degraded portion thereof. Next, that voltage amplitude value and the anticipated tube pressure expected during normal operation or during a postulated accident (e.g., main steam line break) are looked-up or found in the previously established data base. The data base will therefore provide the flow rate through the crack corresponding to the measured voltage amplitude and postulated pressure.

It will be appreciated from the description hereinabove, that an advantage of the present invention is that the empirical leak-rate data for satisfying Draft Regulatory Guide 1.121 (NUREG-1477) can now be obtained in a cost effective manner. This is so because the not inconsiderable expense associated with constructing a bench-scale model steam generator for testing is avoided because the testing is performed on full-sized heat transfer tubes. In addition, the expense associated with removing leaking full-sized steam generator tubes for testing is also avoided because, by use of the invention, such leaking tubes are examined in situ.

It will also be appreciated from the description hereinabove, that another advantage of the present invention is that tube leak-rate data are now precisely obtainable. This is so because leak-rate testing is performed directly on an actual tube disposed in an operating full-sized steam generator, rather than on a bench-scale model steam generator tube which may or may not evince the true tube characteristics existing in an operating full-sized steam generator. Also, the data obtained by use of the invention are more precise for yet another reason. That is, if tubes are removed from a full-sized steam generator for testing, there is a risk that the morphology of the degraded portion of the tube will be different after removal than before removal. This leads to imprecise tube testing data. By use of the invention, the risk of change in tube morphology is avoided because the tube is tested in situ.

Although the invention is illustrated and described herein in its preferred embodiment, it is not intended that the invention as illustrated and described be limited to the details shown, because various modifications may be obtained with respect to the invention without departing from the scope of the claims. For example, a suitable eddy current coil may be integrally attached to mandrel 170 for obtaining the required voltage amplitude, rather than using a separate inspection instrument for performing the eddy current measurement. Moreover, although system 160 is described as suitable for leak-rate testing a nuclear steam generator heat transfer tube, system 160 is also usable whenever in situ leak-rate testing of a tubular member is desired.

Therefore, what is provided are a system and method for in situ testing of the leak-tightness of a wall portion of a tubular member, which tubular member may be a heat transfer tube of the kind found in typical nuclear steam generators.

## Claims

1. A system for in situ testing of the leaktightness of a wall portion (70) of a tubular member (50), comprising :
(a) an elongate body (170) insertable into the tubular member;
(b) spaced-apart radially expandable seal means (180a/b) surrounding said elongate body (170) for sealingly engaging the wall portion, so that a sealed annular chamber (515) is defined in communication with the wall portion as said seal means engages the wall portion;
(c) fluid supply means (210) in fluid communication with the chamber for supplying a fluid to the chamber to pressurize the chamber to a predetermined pressure;
(d) a controller (800) connected to said fluid supply means for controlling said fluid supply means, so that said fluid supply means controllably supplies the fluid to the chamber to maintain the predetermined pressure in the chamber as a breach in the wall portion in communication with the chamber allows the fluid to leak from the chamber; and **characterized by** :
(e) an accumulator tank (760) in fluid communication with said fluid supply means for dampening pressure spikes in said fluid supply means.

2. The system of claim 1, wherein said fluid supply is **characterized by** a flow meter (720) connected thereto for measuring the flow rate of the fluid supplied by said fluid supply means, so that the flow rate of the fluid through the breach equals the flow rate of the fluid supplied by said fluid supply means and so that the flow rate of the fluid supplied by said fluid supply means is measured by said flow meter in order to measure the flow rate of the fluid through the breach.

3. The system of claim 1,
(a) wherein said controller is **characterized by** a first pressure transducer (695) associated with said seal means for sensing the pressure in said seal means for measuring the pressure in said seal means; and
(b) wherein said controller is **characterized by** a second pressure transducer (740) associated with the chamber for measuring the pressure in the chamber.

4. The system of claim 1, wherein said controller is computerized for automatically controlling said fluid supply means.

5. The system of claim 1, further **characterized by** a support mechanism (240) connected to said body for supporting said body.

6. The system of claim 1, further **characterized by** a flexible hose (190) attached to said body.

7. The system of claim 7, further **characterized by** a hose driver (230) engaging said hose for driving said hose and said body connected thereto, so that said body and said hose translate in the tube as said hose is driven.

8. A method of testing the leak-tightness of a wall portion (70) of a tubular member (50), comprising :
(a) inserting an elongate body (170) into the tubular member;
(b) defining a sealed annular chamber (515) adjacent the wall portion by sealingly engaging the wall portion with a pair of expanded spaced-apart bladders (180a/b) surrounding the elongate body (170);
(c) pressurizing the chamber by supplying a fluid to the chamber from a fluid supply circuit (660) in fluid communication with the chamber;
(d) controlling the fluid supply circuit by connecting a controller (800) to the fluid supply circuit;
(e) maintaining a predetermined pressure in the chamber as a breach in the wall portion adjacent the chamber allows the fluid to leak from the chamber by controllably supplying the fluid to the chamber, so that the leak-tightness of the wall portion is tested as the fluid leaks from the chamber;
and **characterized by** the step of :
(f) dampening pressure spikes in the fluid supply circuit (660) by providing an accumulator tank (760) connected to the fluid supply circuit (660).

9. The method of claim 8, wherein said step of maintaining the predetermined pressure in the chamber is **characterized by** the step of sensing the pressure in the chamber by providing a pressure sensor (740) in communication with the chamber.

## Patentansprüche

1. System zur in situ-Überprüfung der Dichtigkeit eines Wandteils (70) eines rohrförmigen Glieds, das folgendes aufweist:
(a) einen langgestreckten Körper (170), der in das rohrförmige Glied eingeschoben werden kann;
(b) beabstandete radial ausdehnbare Dichtungsmittel (180a/b), die den langgestreckten Körper (170) umgeben, um dichtend in das Wandteil einzugreifen, so dass eine abgedichtete ringförmige Kammer (515) in Verbindung mit dem Wandteil definiert ist, wenn das Dichtungsmittel in das Wandteil eingreift;
(c) ein Flüssigkeitslieferungsmittel (210) in Flüssigkeitsverbindung mit der Kammer, um der Kammer eine Flüssigkeit zu liefern, um die Kammer auf einen vorbestimmten Druck unter Druck zu setzen;
(d) ein Steuergerät (800), das an das Flüssigkeitslieferungsmittel angeschlossen ist, um das Flüssigkeitslieferungsmittel zu steuern, so dass das Flüssigkeitslieferungsmittel die Flüssigkeit steuerbar an die Kammer liefert, um den vorbestimmten Druck in der Kammer beizubehalten, wenn ein Bruch in dem Wandteil in Verbindung mit der Kammer gestattet, dass die Flüssigkeit von der Kammer leckt;
und **gekennzeichnet durch**:
(e) einen Sammeltank (760) in Flüssigkeitsverbindung mit dem Flüssigkeitslieferungsmittel zum Dämpfen von Druckzacken in dem Flüssigkeitslieferungsmittel.

2. System nach Anspruch 1, in dem die Flüssigkeitslieferung durch einen Strömungsmesser (720) gekennzeichnet ist, der daran angeschlossen ist, um die Strömungsrate der Flüssigkeit zu messen, die von dem Flüssigkeitslieferungsmittel geliefert wird, so dass die Strömungsrate der Flüssigkeit durch den Bruch gleich der Strömungsrate der Flüssigkeit ist, die von dem Flüssigkeitslieferungsmittel geliefert wird, und so dass die Strömungsrate der Flüssigkeit, die von dem Flüssigkeitslieferungsmittel geliefert wird, von dem Strömungsmesser gemessen wird, um die Strömungsrate der Flüssigkeit durch den Bruch zu messen.

3. System nach Anspruch 1,
(a) in dem das Steuergerät durch einen ersten Druckwandler (695) gekennzeichnet ist, der dem Dichtungsmittel zugeordnet ist, um den Druck in dem Dichtungsmittel zu erfassen, um den Druck in dem Dichtungsmittel zu messen; und
(b) in dem das Steuergerät durch einen zweiten Druckwandler (740) gekennzeichnet ist, der der Kammer zugeordnet ist, um den Druck in der Kammer zu messen.

4. System nach Anspruch 1, in dem das Steuergerät komputerisiert ist, um das Flüssigkeitslieferungsmittel automatisch zu steuern.

5. System nach Anspruch 1, weiterhin **gekennzeichnet durch** einen Stützmechanismus (240), der an den Körper angeschlossen ist, um den Körper zu stützen.

6. System nach Anspruch 1, weiterhin **gekennzeichnet durch** einen biegbaren Schlauch (190), der an dem Körper befestigt ist.

7. System nach Anspruch 7, weiterhin **gekennzeichnet durch** einen Schlauchantrieb (230), der in den Schlauch eingreift, um den Schlauch und den daran angeschlossenen Körper anzutreiben, so dass der Körper und der Schlauch sich in das Rohr übersetzen, wenn der Schlauch angetrieben wird.

8. Verfahren zur Überprüfung der Dichtigkeit eines Wandteils (70) eines rohrförmigen Glieds (50), das folgendes aufweist:
(a) Einschieben eines langgestreckten Körpers (170) in das rohrförmige Glied;
(b) Definieren einer abgedichteten ringförmigen Kammer (515) neben dem Wandteil durch dichtendes Eingreifen des Wandteils mit einem Paar von ausgedehnten beabstandeten Blasen (180a/b), die den langgestreckten Körper (170) umgeben;
(c) Unter-Druck-Setzen der Kammer durch Liefern einer Flüssigkeit an die Kammer von einem Flüssigkeitslieferungskreis (660) in Flüssigkeitsverbindung mit der Kammer;
(d) Steuern des Flüssigkeitslieferungskreises durch Anschließen eines Steuergeräts (800) an den Flüssigkeitslieferungskreis;
(e) Beibehalten eines vorbestimmten Drucks in der Kammer, wenn ein Bruch in dem Wandteil neben der Kammer gestattet, dass Flüssigkeit von der Kammer leckt, indem die Flüssigkeit gesteuert an die Kammer geliefert wird, so dass die Dichtigkeit des Wandteils überprüft wird, wenn die Flüssigkeit von der Kammer leckt;
und **gekennzeichnet durch** den Schritt des:
(f) Dämpfens von Druckzacken in dem Flüssigkeitslieferungskreis (660) **durch** Liefern eines Sammeltanks (760), der an den Flüssigkeitslieferungskreis (660) angeschlossen ist.

9. Verfahren nach Anspruch 8, in dem der Schritt des Beibehaltens des vorbestimmten Drucks in der Kammer durch den Schritt gekennzeichnet ist, den Druck in der Kammer durch Liefern eines Drucksensors (740) in Verbindung mit der Kammer zu erfassen.

## Revendications

1. Système pour tester in situ l'étanchéité vis-à-vis des fuites d'une partie de paroi (70) d'un élément tubulaire (50), comprenant :
(a) un corps allongé (170) pouvant être inséré à l'intérieur de l'élément tubulaire ;
(b) des moyens formant joint d'étanchéité dilatables radialement mutuellement espacés (180a/b) entourant ledit corps allongé (170) pour venir en contact étanche avec la partie de paroi, de telle sorte qu'une chambre annulaire étanchément scellée (515) soit définie en communication avec la partie de paroi lorsque lesdits moyens formant joint d'étanchéité viennent en contact avec la partie de paroi ;
(c) des moyens de délivrance de fluide (210) en communication des fluides avec la chambre pour délivrer un fluide à la chambre de façon à mettre sous pression la chambre à une pression prédéterminée ;
(d) un dispositif de commande (800) connecté auxdits moyens de délivrance de fluide pour commander lesdits moyens de délivrance de fluide, de telle sorte que lesdits moyens de délivrance de fluide délivrent de façon à pouvoir être commandés le fluide à la chambre afin de maintenir la pression prédéterminée dans la chambre lorsqu'une brèche dans la partie de paroi en communication avec la chambre permet au fluide de fuir depuis la chambre ; et **caractérisé par** :
(e) un réservoir accumulateur (760) en communication des fluides avec lesdits moyens de délivrance de fluide pour amortir les pointes de pression dans lesdits moyens de délivrance de fluide.

2. Système selon la revendication 1, dans lequel ladite délivrance de fluide est **caractérisée par** un débitmètre (720) relié à celle-ci pour mesurer le débit d'écoulement du fluide délivré par lesdits moyens de délivrance de fluide, de telle sorte que le débit d'écoulement du fluide à travers la brèche soit égal au débit d'écoulement du fluide délivré par lesdits moyens de délivrance de fluide, et de telle sorte que le débit d'écoulement du fluide délivré par lesdits moyens de délivrance de fluide soit mesuré par ledit débitmètre afin de mesurer le débit d'écoulement du fluide à travers la brèche.

3. Système selon la revendication 1,
(a) dans lequel ledit dispositif de commande est **caractérisé par** un premier transducteur de pression (695) associé auxdits moyens formant joint d'étanchéité pour détecter la pression dans lesdits moyens formant joint d'étanchéité afin de mesurer la pression dans lesdits moyens formant joint d'étanchéité ; et
(b) dans lequel ledit dispositif de commande est **caractérisé par** un deuxième transducteur de pression (740) associé à la chambre pour mesurer la pression dans la chambre.

4. Système selon la revendication 1, dans lequel ledit dispositif de commande est informatisé pour commander automatiquement lesdits moyens de délivrance de fluide.

5. Système selon la revendication 1, caractérisé de plus par un mécanisme de support (240) relié audit corps pour supporter ledit corps.

6. Système selon la revendication 1, caractérisé de plus par un tuyau souple (190) fixé audit corps.

7. Système selon la revendication 1, caractérisé de plus par un dispositif d'actionnement de tuyau (230) s'engageant avec ledit tuyau pour actionner ledit tuyau et ledit corps relié à celui-ci, de telle sorte que ledit corps et ledit tuyau effectuent une translation dans le tube lorsque ledit tuyau est actionné.

8. Procédé pour tester l'étanchéité vis-à-vis des fuites d'une partie de paroi (70) d'un élément tubulaire (50), comprenant :
(a) l'insertion d'un corps allongé (170) à l'intérieur de l'élément tubulaire ;
(b) la définition d'une chambre annulaire étanchément scellée (515) au voisinage de la partie de paroi en faisant venir en prise étanchément la partie de paroi avec une paire de vessies dilatées mutuellement espacées (180a/b) entourant le corps allongé (170) ;
(c) la mise sous pression de la chambre en délivrant un fluide à la chambre à partir d'un circuit de délivrance de fluide (660) en communication des fluides avec la chambre ;
(d) la commande du circuit de délivrance de fluide en connectant un dispositif de commande (800) au circuit de délivrance de fluide ;
(e) le maintien d'une pression prédéterminée dans la chambre lorsqu'une brèche dans la partie de paroi adjacente à la chambre permet au fluide de fuir depuis la chambre en délivrant de façon pouvant être commandée le fluide à la chambre, de telle sorte que l'étanchéité vis-à-vis des fuites de la partie de paroi soit testée lorsque le fluide fuit depuis la chambre ;
et **caractérisé par** les étapes suivantes :
(f) l'amortissement des pointes de pression dans le circuit de délivrance de fluide (660) en disposant un réservoir accumulateur (760) relié au circuit de délivrance de fluide (660).

9. procédé selon la revendication 8, dans lequel ladite étape de maintien de la pression prédéterminée dans la chambre est **caractérisée par** l'étape de détection de la pression dans la chambre en disposant un détecteur de pression (740) en communication avec la chambre.
